# EUROPEAN PATENT SPECIFICATION

(11) **EP 1 599 055 B1**
(45) Date of publication and mention of the grant of the patent: **16.08.2006**
(21) Application number: 05010456.1
(22) Date of filing: 13.05.2005
(51) Int. Cl.: H04Q 3/68

(54) **Network element with multistage lower order switching matrix**
Netzelement mit mehrstufiger Niedrigordnung-Schaltungsmatrix
Élément de réseau avec matrice de commutation d'ordre inférieur à plusieurs étages

(30) Priority: 14.05.2004 EP 04291234; 17.03.2005 US 81514
(43) Date of publication of application: 23.11.2005
(73) Proprietor: ALCATEL, 75008 Paris (FR)
(72) Inventor: Jäkel, Hans-Jörg, Dr., 70439 Stuttgart (DE); Borschel, Hartmut, 70435 Stuttgart (DE); Beisel, Werner, 71638 Ludwigsburg (DE); Humblet, Pierre Amédée, Cambridge MA 02139 (US); Schoenherr, Brian William, Natick, MA 01760 (US)
(74) Representative: Urlichs, Stefan

(56) References cited:
- US-B1- 6 343 075
- "Types and general characteristics of synchronous digital hierarchy (SDH) equipment" ITU-T G.782, [Online] January 1994 (1994-01), pages 21-24, XP002300535 Retrieved from the Internet: URL:http://mirror.itu.int/dms/pay/itu-t/re c/g/T-REC-G.782-199401-S!!PDF-E.pdf> [retrieved on 2004-10-12]

## Description

### Field of the Invention

The present invention relates to the field of telecommunications and more particularly to a network element of a transport network with a multistage lower order switching matrix.

### Background of the Invention

Transport networks serve for the physical layer transport of tributary signals. Such tributaries are multiplexed together according to multiplexing rules to form higher bitrate multiplex signals for o more efficient transport through the network. A well known type of transmission networks conforms with the SDH standard ITU-T G.707, 10/2000. The US equivalent of SDH is referred to as SONET.

In SDH, tributary signals are mapped into virtual containers of appropriate size. Lower order virtual containers are multiplexed into higher order virtual containers. The higher order virtual containers are mapped into frames where they are addressed by a higher order pointer called the administrative unit (AU) pointer, which allows them to float freely, inside the frames so as to balance phase and frequency deviations in the network. Similarly, the lower order virtual containers c. e addressed inside the higher order virtual containers by lower order pointers called the tributary unit (TU) pointers.

The basic frame structure is called STM-1 (synchronous transport module). Higher capacity signals are obtained by bytewise multiplexing N STM-1 signals to form an STM-N signal.

Virtual connections, which are referred to as paths, ore established within the network through the use of network elements that are capable of switching these virtual containers from any to any I/O port in space and time domain. This process is typically referred to as crossconnecting because such virtual connections are of semi-permanent nature. Such network elements are therefore also termed crossconnects.

For an SDH network, there exist basically two types of crossconnects, namely broadband crossconnects that are capable of switching higher order virtual containers, only, and wideband crossconnects that are capable of switching both, higher order and lower order virtual containers.

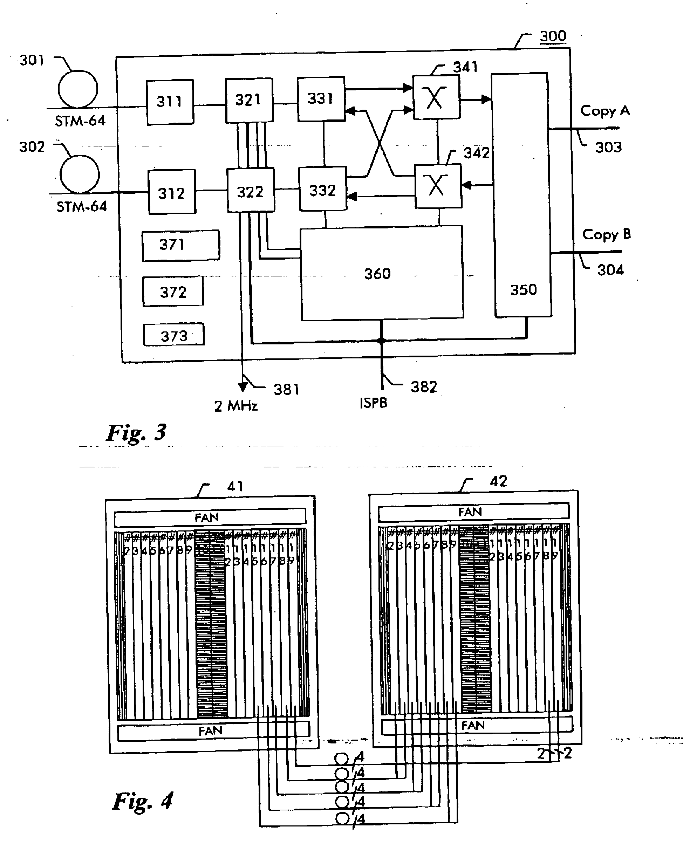

The core of a crossconnect is its switching matrix. Depending on the required matrix capacity, some crossconnects use a square switching matrix, while others have a multi-stage switching matrix such as a Clos matrix. Wideband crossconnects have often a higher order switching matrix and a separate lower order switching matrix. A generalized logical block diagram of such an architecture is shown for example in ITU-T G.782 01/94 , Figure 3-9.

In the existing networks, a need for more and more switching capacity arises as the traffic volume increases, particularly in metropolitan area networks. On the other hand, network operators request more compact and cost-effective network elements that require less footprint space while providing at the same time lower power consumption and reduced heat dissipation. It is therefore an object of the present invention to provide a compact high capacity wideband crossconnect.

### Summary of the Invention

These and other objects that appear below are achieved by a network element for a transport network of the type discussed before, which has a three stage lower order switch matrix, which contains
an input matrix stage and an output matrix stage, wherein both include a plurality of hybrid matrices designed to switch said lower order multiplex units or higher order multiplex units; and
a center stage comprising of a plurality of matrices capable of switching higher order multiplex units only, wherein each of the plurality of center stage matrices is connected to each of the first input matrix stage matrices and each of the output matrix stage matrices.

The matrix design according to the invention is very advantageous as the some center stage matrix components can be re-used for the lower order switching matrix that have to be developed for a higher order switching matrix, anyway. This reduces the development time and costs dramatically. Preferably, the input and output stages are arranged on the I/O boards of the crossconnect. This leads to very compact design and has the additional advantage that a broadband crossconnect can be altered into a wideband crossconnect by simply replacing the I/O boards.

### Brief Description of the Drawings

Preferred embodiments of the invention will be describe in the following with reference to the accompanying drawings, in which
figure 1 shows a generalized logical block diagram of a wideband crossconnect;
figure 2 shows the architecture of a lower order crossconnect matrix according to the invention;
figure 3 shows the hardware architecture of an I/O board with lower order matrix stages for use in a wideband crossconnect according to the invention;
figure 4 shows the physical setup of a wideband crossconnect making use of the invention;
figure 5 shows schematically the working principle in the lower order matrix;
figure 6 shows a network element with a three stage lower order switch matrix; and
figures 7a and 7b show rearrangement of broadband and wideband connections in an end stage module.

### Detailed Description of the Invention

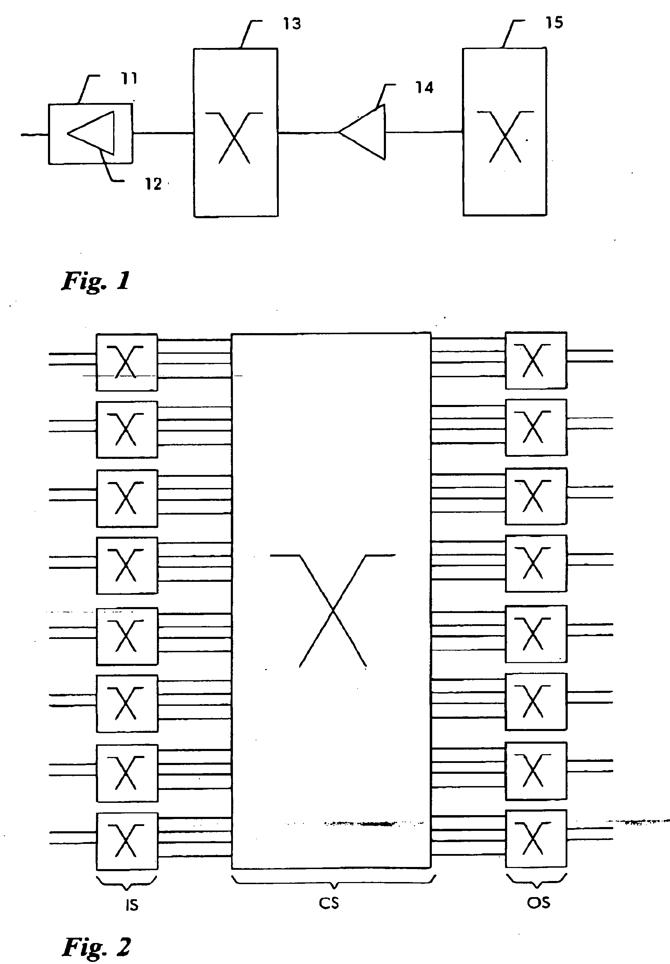

The basic design of a wideband crossconnect such as it was known from ITU-T G.782 (01/94) is shown as a block diagram in figure 1. It contains on input/output port 11 with a line termination function 12 connected to a higher order crossconnect matrix 13. Crossconnect matrix 13 is connected via a higher order assembler function 14 to a lower order crossconnect matrix 15. For the sake of simplicity, only one I/O port and only one matrix connection is shown, although it should be clear to those skilled in the art that each matrix has a number matrix connections and that a number of I/O ports are available in a crossconnect.

The function of this architecture is as follows. An STM-N signal is received at the I/O port 11, where the section overhead is terminated by line termination function 12. This function is also referred to as the transport terminal function (TTF). Higher order multiplexing units of the type AU-4 or AU-3 are crossconnected by the higher order matrix 13 from any to any I/O port. This function is known as higher order path connection (HPC). When lower order access is required, i.e., when traffic at lower order virtual container level VC-3 (for SDH only) VC-2, VC-12, or VC-11 is to be crossconnected between any two I/O ports, then these signals are switched to the corresponding matrix connections via higher order assembler functions 14 to the lower order matrix 15, where lower order path connections (LPC) are established. The higher order assembler contains a higher order path termination (HPT) function and a higher order path adaptation (HPA) function. An example of a HPA function is described in EP 0 440 128 B.

The invention provides a scalable implementation of functional blocks 14 and 15 which allows very high traffic volume at low costs and with high density. This is achieved through the use of a three stage matrix where only input and output stages perform lower order switching while the center stage of the matrix switches higher order multiplex units, only, i.e., VC-4 or VC-3 or both of these.

The use of a center stage switching only high order connections considerably reduces its complexity and cost. It causes, however, some loss of capacity because some high order connections to and from the center stage may not be filled with low order connections. One con show that the number of wasted high order connections to (or from) an end stage need not exceed the number of end stages. The invention proposes thus a design where the number of end stages is small compared to the number of higher order connections out of an end stage and where the loss due to incomplete packed internal connections is therefore negligible.

The principle of the invention is shown in figure 2. The crossconnect matrix has as its center stage CS a square matrix capable of switching at the level of higher order multiplexing units, only, preferably at level VC-3. The center stage has in the preferred embodiment on overall capacity of 640 Gbit/s, i.e. of 4096 STM-1 equivalents. The input stage IS and the output stage OS each consists in this embodiment of 8 lower order switch modules. Each lower order switch module of the input stage has two inputs and four outputs for STM-64 signals. Conversely, each module of the output stage has four inputs connected to the center stage and two outputs for STM-64 signals. Each module of the input and the output stage has thus a capacity of 20 Gbit/s or in other words of 128 STM-1 equivalents. This is due to the fact that a 1:2 broadening in the end stages is required to fully support sub-network connection protection (SNCP) function in a non-blocking manner. However, if no SNCP support is required or if blocking can be tolerated under certain conditions, then each end stage module can have as many inputs as outputs.

While the internal connections between input stage, center stage and output stage are shown in figure 2 as 10 Gbit/s connections (i.e., internal STM64), it is preferred to demultiplex the internal signals down to 2,5 Gbit/s (i.e., internal STM16), which can be easily implemented as o bock panel bus.

Input stage modules and output stage modules are physically arranged on the same I/O boards. An exemplary I/O board 300 is shown in figure 3. It contains terminals for two optical fibers 301 and 302, each carrying an STM64 signal. Fiber 301 is connected to on optical-to-electrical converter 311, which converts the received optical signal to an electrical signal that is fed to on overhead processing circuit 321. Overhead processing circuit demultiplexes the 10 GBit/s STM64 signal into four STM16 signals, extracts and processes the section overhead and derives a 2 MHz reference clock signal 381. Overhead processing circuit 321 is connected to a TU pointer processor 331, which performs higher order path termination and adaptation on the individual VC-4 or VC-3 signals contained with the STM16. Fiber 302 is in turn connected to optical-to-electrical converter 312, which feeds via overhead processing circuit 322 to TU pointer processor 332. TU pointer processors 331 and 332 are connected to the inputs of a lower order switch module 341 which forms part of the input stage of the 3-stage matrix arrangement shown in figure 2. The outputs of matrix module 341 are connected to a back panel interface 350, which connects to the back panel of the crossconnect and provides an equipment protection switching (EPS) function between the center stage copies A and B.

As shown in figure 3, a direct connection exists between the 1 st stage 341 and 3rd stage 342 on the same card. It could be used to route low order connections that remain on the same card, and this would reduce the load on the center stage and the potential attendant blocking probability. This feature is not necessarily used in an implementation of the invention for ETSI SDH but it might be advantageously used in an ANSI (i.e., SONET) implementation.

In addition, the I/O board 300 has an on board processor 360, which can easily be realized as an FPGA (Field Programmable Gate Array). Processor 360 receives the extracted overhead bytes from overhead processors 321 and 322, performs pre-processing of performance monitoring (PM) data and alarm filtering and sends the raw PM data to the back panel interface 350 for in-band signaling. Moreover, processor 360 configures the TU pointer processors 331 and 332 to the actual multiplex structures within the received STM64 signals, respectively. Finally, the I/O board contains some support functions such as a circuit 371 for management access, i.e., for FPGA download and for controlling the optical-to electrical converters 311 and 312, an onboard power supply 372, and an voltage controlled oscillator 373 for generating local clocks. A control lead 382 connects to a common shelf controller.

In transmit direction, internal signals from center stage matrix CS are received from the back panel at back panel interface 350, which extracts in-band channel information and forwards the internal STM16 signals to the inputs of a lower order switch module 342 which forms part of the output stage of the Clos Matrix of figure 2. The outputs of switch module 342 are fed via TU pointer processors 331 and 332 to overhead processors 321 and 322, respectively, where the signals ore multiplexed to form output STM64 signals and section overhead bytes as received from processor 360 inserted. The STM64 signals are then converted to the optical by converters 311 and 312 and send to fibers 301 and 302, respectively.

Figure 4 shows a front side view of an assembled wideband crossconnect system, which consists of a broadband crossconnect 41 and a lower order extension shelf 42. The system makes use of a conventional broadband crossconnect 41 system such as the Alcatel 1678 Metro Core Connect. In the figure, broadband crossconnect 41 contains a shelf with a bock panel, fans on top and bottom and 20 slots for circuit boards. Slots #1 and #20 are not visible from the front plate as they hold bus termination boards for the high speed back panel bus. Slots #2 to #9 and #12 to #19 hold I/O boards and slots # 10 and #11 hold matrix boards acting as matrix copy A and B, respectively. Each matrix board contains a higher order square matrix providing a total capacity of 4096 STM-1 equivalents. Each I/O board terminates 4 external optical fibers carrying STM64 signals.

Each I/O board has four I/O ports for STM64 signals. The back panel interconnects I/O boards and matrix boards at 2,5 Gbits/s. STM64 signals received at the I/O ports of the I/O boards are thus demultiplexed into four internal STM16 signals, respectively. Each matrix board is capable of switching AU-3 contained within the internal STM16 signals. This enable full support for SONET type signals. For ETSI type signals, the matrix switches AU-4 as three contiguous concatenated AU-3s in parallel, thus allowing also full support for ETSI type signals.

Most of the hardware of the broadband crossconnect 41 is also re-used for the lower order extension shelf 42, where only the I/O cards are replaced with I/O cards from figure 3. The only change that must be mode to the matrix boards in slots #10 and #11 affects the firmware (FPGA code) on the boards so as to enable processing and storage of lower order PM data instead of higher order PM data. PM data processing is, however, well known per se to those skilled in the art.

As described above, each I/O board of the broadband crossconnect has four STM64 ports, while each I/O board of the extension shelf has only two STM64 ports. I/O boards in slots #15 to #18 of the broadband system 41 are used for internal interconnections between the broadband system and the extension shelf. The I/O board in slot #19 is used as protection board to replace any other failed board in the case of a failure. In the extension shelf 42, the I/O boards in slots #2 to #9 ore used for lower order path access, while the boards in slots #18 and #19 serve for equipment protection purpose. Slots #12 to #17 of the extension system 41 could be left unused or could be used in the same way together with slots #12 to #14 of the broadband system 41. The I/O ports of each I/O board from system 41 that is used for internal interconnections is connected via four fibers to the two I/O ports of two I/O boards from extension shelf 42. For instance, the board in slot #15 of shelf 41 connects to the boards #2 and #3 in shelf 41. Equally, the protection board in slot #19 of shelf 41 connects to the two protection boards in slots #18 and #19 of shelf 42. From the lower order extension shelf 42, the internal signals looped back to the higher order system 41, where they are switched to the appropriate output ports.

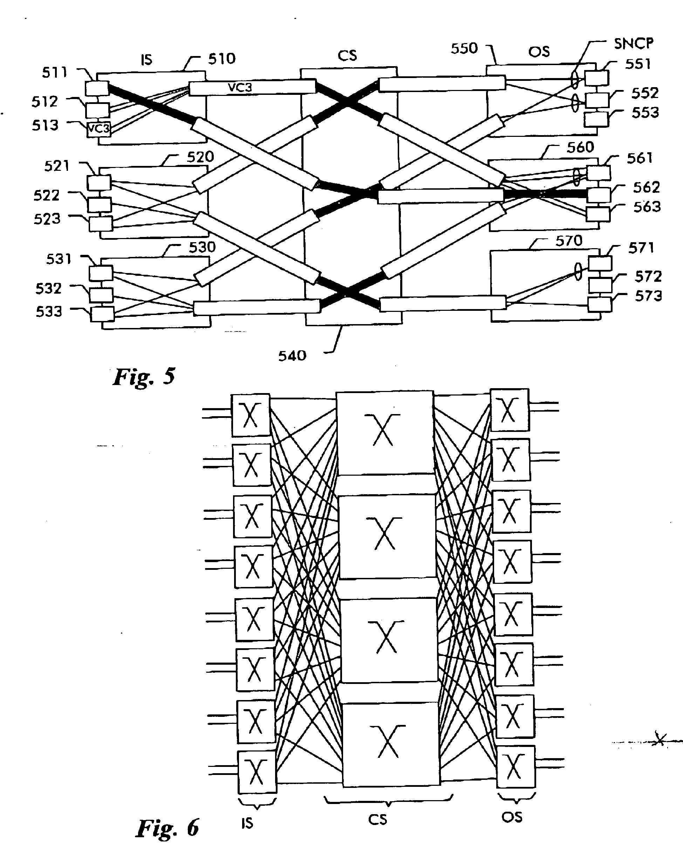

The working principle of the matrix arrangement according to the invention is shown schematically in figure 5. Three input stage modules 510, 520, 530, three output stage modules 550, 560, 570 and the center stage matrix board 540 are shown. By way of example, three VC3 are shown per input and per output stage module, e.g., 511, 512, and 513 for module 510. It should be clear, however, that in reality, each module has a capacity of 128 (i.e., 2 x 64) STM-1 equivalents and hence processes 384 VC3s.

Lower order switching, depicted as thin lines through the end stages IS and OS, takes only place in the input and output stage modules. Conversely, the center stage CS switches only higher order virtual containers, i.e., VC-3 in the preferred embodiment. This is represented by gray-shaded "pipes" crossing the center stage CS. A VC-12 that is contained in the VC-3 522 at input stage module 520 and that is destined for the output VC-3 573 at output stage 570 is switched by module 520 in space and time to a VC-3 center stage matrix connection towards module 570. In other words, VC-3 connections are set-up through the center stage matrix to interconnect the various input stage modules to the various output stage modules as required. In the input stage, a lower order VC destined for a particular output stage module is packed into an internally used VC-3 leading through the center stage to the appropriate output stage module and at the output stage module, the lower order VC is extracted from the internal VC-3 and sorted to the appropriate output destination, i.e., to VC-3 573 in this example.

It is preferable in this context that lower order VCs are packed in an optimized way into the VC-3 center stage connections. If a connection for a lower order tributary is set up, an already existing but partially filled VC-3 connection between the concerned first and third stage matrix modules has to be re-used. Only if this is not possible, because all VC-3 leading to the concerned output stage module are fully filled, a new VC-3 connection is set up through the center stage.

It is also possible to set up connections for entire VC-3s rather than for smaller tributaries. This is shown for VC-3 511. In addition, sub-network connection protection (SNCP) is performed in the output stage modules. This is shown for VC-3s 551, 552, 561, and 571. SNCP means that a tributary is transmitted via two independent paths, i.e., the active and the protection path, and that the better of the two signal copies is selected at the termination point of the SNCP. To fully support SNCP, an expansion of the matrix capacity from 128 STM-1 equivalents at the inputs stages to 256 STM-1 equivalents towards the center stage is foreseen.

In the specific embodiment, the input and output matrix stages are capable of switching VC-3 and VC-12, which are the most commonly used multiplex unit types in ETSI SDH systems. Alternatively, a system designed for the US SONET market would be capable of switching VC-11 rather than VC-12 in addition to VC-3. It would also be possible to handle VC-11, VC-12, and VC-2 within a single system, but with the restriction that these are grouped to VT-groups, where each VT-group can contain either one single VC-2, or three VC-12s, or four VC-11s but that inside any such VT-group no mixing of different VC types (VC-11, VC-12) is allowed.

The partially used VC-3 connections cannot be completely avoided. To cope with this in all situations, the capacity of the end stage modules is preferably reduced from 128 to 125 STM-1 equivalents for the sixteen end stage modules. The expansion in the input stage is then 125:256.

Due to deletion of connections of lower order tributaries it is possible that after a certain time a large number of partially used internal VC-3 connections may remain. This situation can be improved by performing an optimization of the internal connections, i.e. a re-packing of connections in the input and output stages. In order to reduce the connection set-up time, the optimization should be done when the ratio between used and necessary higher order connections gets to high for instance after a configurable number of crossconnections of lower order virtual tributaries have been released.

The principle of the re-packing algorithm is as follows: For each pair of first and third stages, low order connections are moved from some high order connections, preferably those that are least occupied, to other high order connections, preferably those that are most occupied, until at most one high order connection remains partially occupied. The old and new low order connections can co-exist for some time (bridge and roll), which can provide hitless re-packing even when the three stages are not switched synchronously.

Figure 6 shows in a second embodiment a network element with a three stage lower order switch matrix, preferably a Clos matrix. The matrix has an input matrix stage IS and an output matrix stage OS. Both include a plurality of hybrid matrices designed to switch said lower order multiplex units or higher order multiplex units as described with respect to the first embodiment. The center stage on the other hand contains a plurality of matrices, which are capable of switching only higher order multiplex units. Each of the plurality of center stage matrices is connected to each of the first input matrix stage matrices and each of the output matrix stage matrices.

In this aspect of the invention, the center stage is allowed to be made of several smaller modules, instead of being a single large broadband switch. It is advantageous to use in a Clos configuration several small broadband center stage modules rather than a single large center stage matrix. This improves scalability, reduces costs for the manufacturer, and increases flexibility for the customer.

Since the broadband center stage is realized as several modules, this requires rearranging the paths through the center stage CS. Classical rearrangement algorithms can be adapted to the new configuration.

It may be necessary to occasionally optimize the system to free inefficiently used broadband paths by "repacking" the VC connections (virtual container, also known as VT- virtual tributary connections in the SONET terminology) inside the broadband paths, thus freeing a broadband timeslot on a link between the center stage CS and the input stage IS or output stage OS.

The input stage IS and the output stage OS modules are hybrid broadband/wideband switches. Their inputs and outputs are still broadband links, carrying wideband or broadband connections. As compared to figure 2, there are now several center stage matrix modules, and each of the input stage IS and output stage OS modules is connected to each of the center stage modules in a symmetric pattern.

Depending on the numbers of center stages and on the capacity of the various broadband links, the system can be blocking, rearrangeably non-blocking or strictly non-blocking. The preferred configuration is usually to be rearrangeably non-blocking.

Broadband paths are setup between the input stage IS modules and output stage OS modules depending on the broadband and wideband traffic pattern. When a new broadband path is requested (either because of a new broadband or a new wideband connection), it may be first necessary to "repack" existing wideband connections to free a broadband link. It is advantageous to free broadband links such that a center stage will have free links to the input stage IS and to the output stage OS used by the new connection. If this is not possible, the center stage broadband paths must be rearranged. This is not completely classical because the input stage IS and output stage OS are wideband switches, i.e., capable of switching higher and lower order virtual containers. It turns out that classical rearrangement algorithms can be adopted to find the paths through the center stage. When rearranging a broadband path carrying wideband connections, it is necessary to reroute all such connections from the old broadband link to the new broadband link in the affected IS and OS modules, see figure 8. This can be done in a synchronous "hitless" manner or by using a "bridge and roll" type algorithm.

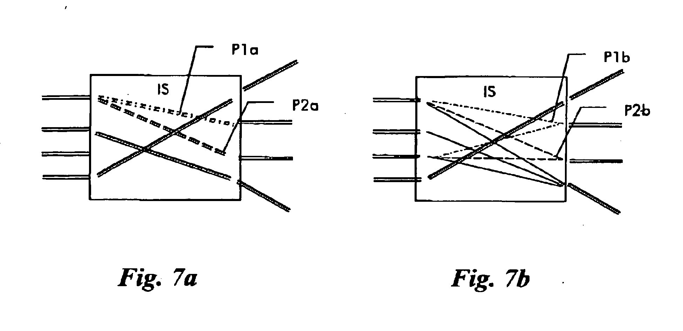

Figure 7a shows a traditional broadband rearrangement. One (or several) broadband connections in an end stage IS or OS are connected from the old (P2a, long dash) to a new (P1a, short dash) center stage module.

Figure 7b shows a rearrangement in the proposed system. An end stage switches broadband (double lines) or wideband (single lines). In a broadband rearrangement, all wideband connections using the old (P2b, long dash) broadband connection to a center stage are reconnected to the new (P1b, short dash) center stage module.

It should be noted that the constructional details and characteristics described with respect to the first embodiment above can be similarly applied also to the second embodiment. Moreover, it should be noted that the end stages described above can support both broadband and wideband connections.

Having described two preferred embodiments of the invention in full detail, it should be clear to those skilled in the art, that various modifications and changes can be done without deporting from the concepts of the invention.

## Claims

1. A network element for a transport network designed for the transport of framed multiplex signals, which signals comprising higher order multiplex units copoble of corrying lower order multiplex units; the network element having a three stage lower order switch matrix (15) **characterised by:**
an input matrix stage (IS) and an output matrix stage (OS), wherein both include a plurality of hybrid matrices designed to switch said lower order multiplex units or higher order multiplex units; and
a center stage (CS) comprising of a plurality of matrices capable of switching higher order multiplex units only, wherein each of the plurality of center stage (CS) matrices is connected to each of the first input matrix stage (IS) matrices and each of the output matrix (OS) stage matrices.

2. A network element according to claim 1, wherein said lower order multiplex units are addressed inside said higher order multiplex units by tributary unit pointers and wherein said network element comprises a tributary unit pointer processors (14, 331) for adapting said tributary unit pointers.

3. A network element according to claim 1, wherein said multiplex signals conform to the ITU-T recommendations for SDH G.707, 10/2000, wherein said higher order multiplex units comprise virtual containers of the type VC-4 or VC-3 and said lower order multiplex units comprise virtual containers of the type VC-3, VC-2, VC-12, or VC-11, and wherein said center stage (CS) is capable of switching at least virtual containers of the type VC-3 and said input matrix stage (IS) and said output matrix stage (OS) ore capable of switching at least two of said lower order virtual container types.

4. A network element according to claim 1, wherein said three stage lower order switch matrix is a Clos matrix.

5. A network element according to claim 1, further comprising a higher order switching matrix (13) connected in series with said lower order switching matrix (15).

6. A network element according to claim 1, wherein said input stage and said output stage comprise a number of switch modules (341, 342; 510, 520, 530, 550, 560, 570), and wherein an input stage module (341) and on associated output stage module (342) are physically arranged on an I/O board (300) of said network element.

7. A network element according to claim 6, wherein said plurality of center stage matrices are physically arranged one or more matrix boards (540) and wherein said I/O board (300) and said one or more matrix boards (540) ore interconnected through a back panel of said network element.

8. A network element according to claim 6, wherein said input stage module (341) and said associated output stage module (342) physically arranged on the same I/O board (300) have a direct interconnection for low order connections that remain on the some I/O boord.

9. A network element according to claim 1, wherein said input stage (IS) has an expansion of at least 1:2 from its inputs to its outputs.

10. A network element according to claim 1, which is adopted to perform on optimization of higher order internal connections set up in said center stage (CS) by re-arranging lower order connections set up in said input stage (IS) and in said output stage (OS) so as to minimize the number of partially filled internal higher order multiplexing units.

## Patentansprüche

1. Netzelement für ein Transportnetz, das für den Transport von gerahmten Multiplexsignalen ausgelegt ist, dessen Signale, die Multiplexeinheiten höherer Ordnung umfassen, fähig sind, Multiplexeinheiten niedrigerer Ordnung zu übertragen; wobei das Netzelement eine dreistufige Schaltungsmatrix niedrigerer Ordnung (15) aufweist, **gekennzeichnet durch**
eine Eingangsmatrixstufe (IS) und eine Ausgangsmatrixstufe (OS), worin beide eine Mehrzahl von Hybridmatrizen enthalten, die ausgelegt sind, um die Multiplexeinheiten niedrigerer Ordnung oder die Multiplexeinheiten höherer Ordnung zu schalten; und
eine Mittelstufe (CS), die eine Mehrzahl von Matrizen umfaßt, die in der Lage sind, nur Multiplexeinheiten höherer Ordnung zu schalten, worin jede der Mehrzahl der Matrizen der Mittelstufe (CS) mit jeder der ersten Matrizen der Eingangsmatrixstufe (IS) und jeder der Matrizen der Ausgangsmatrixstufe (OS) verbunden wird.

2. Netzelement nach Anspruch 1, in welchem die Multiplexeinheiten niedrigerer Ordnung innerhalb der Multiplexeinheiten höherer Ordnung durch Pointer der zubringereinheit adressiert werden, und in welchem das Netzelement Zubringereinheiten-Pointerprozessoren (14, 331) zum Anpassen der Pointer der Zubringereinheit umfaßt.

3. Netzelement nach Anspruch 1, in welchem die Multiplexsignale den ITU-T Recommendations für SDH entsprechen, in welchem die Multiplexeinheiten höherer Ordnung virtuelle Container des Typs VC-4 oder VC-3 umfassen und die Multiplexeinheiten niedrigerer Ordnung virtuelle Container des Typs VC-3, VC-2, VC-12 oder VC-11 umfassen, und in welchem die Mittelstufe (CS) fähig ist, mindestens virtuelle Container des Typs VC-3 zu schalten, und die Eingangsmatrixstufe (IS) und die Ausgangsmatrixstufe (OS) fähig sind, mindestens zwei der Typen der virtuellen Container niedrigerer Ordnung zu schalten.

4. Netzelement nach Anspruch 1, in welchem die dreistufige Schaltungsmatrix niedrigerer Ordnung eine Clos-Matrix ist.

5. Netzelement nach Anspruch 1, außerdem umfassend eine Schaltungsmatrix (13) höherer Ordnung, die in Reihe mit der Schaltungsmatrix (15) niedrigerer Ordnung verbunden ist.

6. Netzelement nach Anspruch 1, in welchem die Eingangsstufe und die Ausgangsstufe eine Anzahl von Schaltmodulen (341, 342; 510, 520, 530, 550, 560, 570) umfassen, und in welchem ein Eingangsstufenmodul (341) und ein zugeordnetes Ausgangsstufenmodul (342) physikalisch auf einer E/A-Leiterplatte (300) des Netzelementes angeordnet sind.

7. Netzelement nach Anspruch 6, in welchem die Mehrzahl der Mittelstufenmatrizen physikalisch angeordnet eine oder mehr Matrixleiterplatten (540) sind und in welchem die E/A-Leiterplatte (300) und die eine oder mehr Matrixleiterplatten (540) durch eine Rückwandplatine des Netzelementes verbunden sind.

8. Netzelement nach Anspruch 6, in welchem das Eingangsstufenmodul (341) und das zugeordnete Ausgangsstufenmodul (342), die physikalisch auf der gleichen E/A-Leiterplatte (300) angeordnet sind, eine direkte Verbindung für Verbindungen niedrigerer Ordnung aufweisen, die auf der gleichen E/A-Leiterplatte bleiben.

9. Netzelement nach Anspruch 1, in welchem die Eingangsstufe (IS) eine Erweiterung von mindestens 1:2 von ihren Eingängen zu ihren Ausgängen aufweist.

10. Netzelement nach Anspruch 1, welches angepaßt ist, um eine Optimierung der Einrichtung von inneren Verbindungen höherer Ordnung in der Mittelstufe (CS) durch Neuanordnen der Einrichtung der Verbindungen niedrigerer Ordnung in der Eingangsstufe (IS) und in der Ausgangsstufe (OS) durchzuführen, um die Anzahl der teilweise gefüllten inneren Multiplexeinheiten höherer Ordnung zu minimieren.

## Revendications

1. Elément de réseau pour un réseau de transport conçu pour le transport de signaux multiplex tramés, lesquels signaux comprenant des unités multiplex d'ordre supérieur susceptibles d'acheminer des unités multiplex d'ordre inférieur ; l'élément de réseau ayant une matrice de commutation d'ordre inférieur à trois étages (15) **caractérisé en ce que** :
un étage de matrice d'entrée (IS) et un étage de matrice de sortie (OS), dans lequel les deux incluent une pluralité de matrices hybrides conçues pour commuter lesdites unités multiplex d'ordre inférieur ou lesdites unités multiplex d'ordre supérieur ; et
un étage central (CS) composé d'une pluralité de matrices susceptibles de commuter des unités multiplex d'ordre supérieur seulement, dans lequel chacune de la pluralité de matrices d'étage central (CS) est connectée à chacune des premières matrices d'étages de matrices d'entrée (IS) et chacune des matrices d'étages de matrices de sortie (OS).

2. Elément de réseau selon la revendication 1, dans lequel lesdites unités multiplex d'ordre inférieur sont adressées à l'intérieur desdites unités multiplex d'ordre supérieur par des pointeurs d'unités tributaires et dans lequel ledit élément de réseau comprend des processeurs de pointeurs d'unités tributaires (14, 331) pour adapter lesdits pointeurs d'unités tributaires.

3. Elément de réseau selon la revendication 1, dans lequel lesdits signaux multiplex sont conformes aux recommandations de l'ITU-T pour SDH G.707, 10/2000, dans lequel lesdites unités multiplex d'ordre supérieur comprennent des conteneurs virtuels du type VC-4 ou VC-3 et lesdites unités multiplex d'ordre inférieur comprennent des conteneurs virtuels du type VC-3, VC-2, VC-12 ou VC-11, et dans lequel ledit étage central (CS) est susceptible de commuter au moins des conteneurs virtuels du type VC-3 et ledit étage de matrice d'entrée (IS) et ledit étage de matrice de sortie (OS) sont susceptibles de commuter au moins deux desdits types de conteneurs virtuels d'ordre inférieur.

4. Elément de réseau selon la revendication 1, dans lequel ladite matrice de commutation d'ordre inférieur à trois étages est une matrice Clos.

5. Elément de réseau selon la revendication 1, comprenant en outre une matrice de commutation d'ordre supérieur (13) connectée en série avec ladite matrice de commutation d'ordre inférieur (15).

6. Elément de réseau selon la revendication 1, dans lequel ledit étage d'entrée et ledit étage de sortie comprennent un certain nombre de modules de commutation (341, 342 ; 510, 520, 530, 550, 560, 570), et dans lequel un module d'étage d'entrée (341) et un module d'étage de sortie associé (342) sont agencés physiquement sur une carte E/S (300) dudit élément de réseau.

7. Elément de réseau selon la revendication 6, dans lequel ladite pluralité de matrices d'étage central est agencée physiquement sur une ou plusieurs cartes de matrices (540) et dans lequel ladite carte E/S (300) et ladite une ou plusieurs cartes de matrices (540) sont interconnectées grâce à un panneau arrière dudit élément de réseau.

8. Elément de réseau selon la revendication 6, dans lequel ledit module d'étage d'entrée (341) et ledit module d'étage de sortie associé (342) agencés physiquement sur la même carte E/S (300) ont une interconnexion directe pour des connexions d'ordre faible qui restent sur la même carte E/S.

9. Elément de réseau selon la revendication 1, dans lequel ledit étage d'entrée (IS) a une extension d'au moins 1 :2 de ses entrées à ses sorties.

10. Elément de réseau selon la revendication 1, qui est adapté pour effectuer une optimisation de connexions internes d'ordre supérieur configurées dans ledit étage central (CS) en agençant de nouveau des connexions d'ordre inférieur configurées dans ledit étage d'entrée (IS) et dans ledit étage de sortie (OS) afin de minimiser le nombre d'unités de multiplexage d'ordre supérieur internes partiellement remplies.
